Europäisches Patentamt

European Patent Office

Office européen des brevets

(19)

(11) Numéro de publication : **0 475 826 A1**

(12) **DEMANDE DE BREVET EUROPEEN**

(21) Numéro de dépôt : **91402385.8**

(22) Date de dépôt : **05.09.91**

(51) Int. Cl.⁵ : **E04D 5/14,** E04B 1/66,
F16B 43/00

(30) Priorité : **13.09.90 FR 9011330**

(43) Date de publication de la demande :
**18.03.92 Bulletin 92/12**

(84) Etats contractants désignés :
**BE DE ES FR GB LU NL**

(71) Demandeur : **AXTER**
**8, Parvis de Saint Maur**
**F-94106 Saint Maur Cedex (FR)**

(72) Inventeur : **Ovaert, Francis**
**10, Boulevard Jourdan**
**F-75014 Paris (FR)**
Inventeur : **Desgouilles, Henri**
**Résidence la Closeraie, 4, Rue des Fontaines**
**F-60500 Chantilly (FR)**
Inventeur : **Drouilly, Michel**
**21, Rue de Montreuil**
**F-78000 Versailles (FR)**

(74) Mandataire : **Moncheny, Michel et al**
**c/o Cabinet Lavoix 2 Place d'Estienne d'Orves**
**F-75441 Paris Cedex 09 (FR)**

(54) **Plaquette de répartition pour la fixation d'une membrane d'étanchéité.**

(57)    Selon l'invention, une plaquette (25) de répartition comporte un orifice (26) pour le passage d'un organe de fixation, qui est décalé et situé plus proche du bord intérieur (29) de la plaquette que de son bord extérieur (30).

Cette disposition permet de rapprocher le bord extérieur (30) du bord (3) du lé de matériau d'étanchéité et de réduire la largeur de recouvrement entre deux lés adjacents.

Application, notamment, aux revêtements d'étanchéité pour toitures de bâtiments.

EP 0 475 826 A1

FIG.2

La présente invention concerne les revêtements d'étanchéité, notamment pour toiture de bâtiment ou analogue, et plus particulièrement les dispositifs utilisés pour la fixation de ces revêtements sur leur support.

On connaît des revêtements d'étanchéité formés de plusieurs lés d'un matériau étanche, chaque lé posé sur le support étant fixé à ce dernier au moyen d'organes de fixation tels que des vis ou des rivets, associés à des plaquettes de répartition interposées entre les têtes de ces organes de fixation et le matériau étanche. Chaque lé est fixé sur le support le long d'au moins un de ses bords par de tels moyens de fixation, et deux lés successifs sont disposés à recouvrement partiel, le lé supérieur recouvrant le bord du lé inférieur le long duquel sont situés les organes de fixation.

Ces derniers constitués souvent comme on l'a indiqué ci-dessus de vis ou de rivets sont associés à des plaquettes métalliques de forme circulaire, carrée ou rectangulaire à sommets arrondis, munies d'un orifice permettant le passage de l'organe de fixation. Cet orifice est, dans les plaquettes connues, situé au centre de cette plaquette, ce dernier pouvant être défini dans le cas d'une plaquette carrée ou rectangulaire par l'intersection des axes de symétrie du carré ou du rectangle.

Ces revêtements d'étanchéité subissent des sollicitations provoquées par le vent et qui sont de deux types :

– tout d'abord des sollicitations en traction suivant une direction perpendiculaire au plan de la toiture. Ce sont les organes de fixation qui retiennent le revêtement d'étanchéité et la plaquette de répartition joue à cet égard un rôle important car la résistance à l'arrachement est proportionnelle à la surface de la plaquette et dépend par ailleurs de la qualité du matériau d'étanchéité.

– des efforts en traction suivant une direction parallèle au plan de la toiture. Sous l'effet de tels efforts de traction, la membrane risque de se déchirer au droit des organes de fixation. La résistance dépend alors de la qualité du matériau d'étanchéité (résistance à la déchirure) ainsi que la distance entre le bord du lé et l'axe de l'organe de fixation.

On peut donc affirmer que pour un matériau d'étanchéité donné, la fixation du revêtement est d'autant plus efficace que la distance entre le bord du lé et l'organe de fixation est plus grande et que la largeur de la plaquette de répartition est également plus grande.

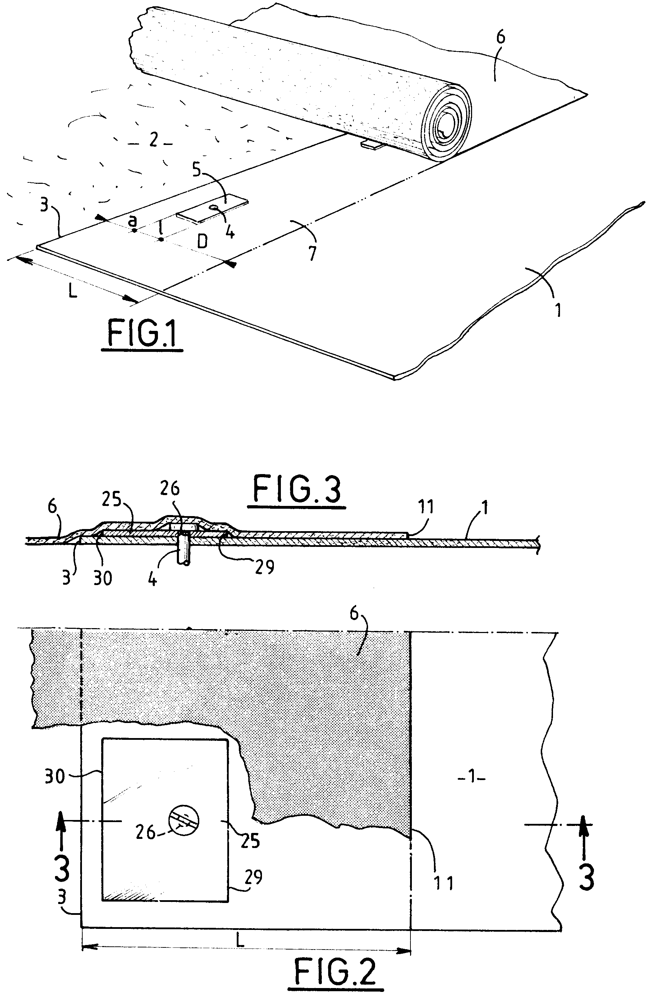

Si l'on définit le bord extérieur de la plaquette de répartition comme étant celui le plus proche du bord adjacent du lé, et le bord intérieur de cette plaquette le bord opposé au bord extérieur, on constate que l'on est donc conduit à prévoir entre le bord extérieur de la plaquette et le bord adjacent du lé une certaine distance $d$ de sorte que le bord intérieur de la plaquette de répartition se trouve éloigné du bord adjacent du lé d'une distance qui est égale à la somme de la distance $d$ et de la largeur $1$ de la plaquette (Fig.1).

Par ailleurs pour assurer une étanchéité efficace, il faut nécessairement prévoir une distance minimale $D$ entre le bord intérieur de la plaquette de répartition et le bord du lé supérieur venant en recouvrement d'un lé inférieur.

Il résulte de ces diverses considérations que dans les agencements connus, la largeur de recouvrement entre les lés est relativement importante, ce qui représente un coût supplémentaire puisque la surface totale de revêtement d'étanchéité nécessaire pour recouvrir une surface déterminée s'en trouve sensiblement augmentée.

Par ailleurs, les plaquettes de répartition utilisées sont planes de sorte que lorsqu'elles n'ont pas une forme circulaire, leur mise en place pose un problème d'orientation qui n'est pas très facile à résoudre et qui provoque une perte de temps, notamment lors du serrage de la vis de fixation qui a tendance à provoquer une rotation de la plaquette autour de son axe.

L'invention se propose de résoudre les problèmes évoqués ci-dessus et notamment le premier d'entre eux et donc de réaliser une plaquette de répartition et un dispositif de fixation qui permettent de réduire la largeur de recouvrement des lés de matériau d'étanchéité.

A cet effet l'invention a pour objet une plaquette de fixation d'une membrane d'étanchéité sur un support, cette plaquette comportant au moins un orifice pour le passage d'au moins un organe de fixation, et présentant un bord extérieur, défini comme étant le plus proche du bord adjacent de la membrane, et un bord intérieur opposé au bord extérieur, caractérisée en ce que l'orifice de passage de l'organe de fixation est situé plus proche du bord intérieur de la plaquette que de son bord extérieur.

Suivant d'autres caractéristiques :

– l'orifice pour le passage de l'organe de fixation est disposé à peu près au tiers de la distance séparant les deux bords intérieur et extérieur de la plaquette;

– la plaquette comporte le long de son bord extérieur un rebord ayant une hauteur inférieure ou égale à l'épaisseur de la membrane d'étanchéité avec laquelle la plaquette doit être utilisée;

– la plaquette comporte au moins un orifice supplémentaire destiné à améliorer la liaison entre deux lés adjacents de la membrane d'étanchéité, dans la zone de leur recouvrement.

L'invention a également pour objet un revêtement d'étanchéité notamment pour toiture de bâtiment, formé de plusieurs lés d'un matériau d'étanchéité, un lé inférieur étant fixé sur son support au moyens d'organes de fixation comportant une tête et une tige, ainsi que de plaquettes de répartition disposées entre la tête des organes de fixation et le matériau d'étanchéité, ces moyens de fixation étant disposés au voisinage d'un bord d'un lé dit "lé inférieur", et un lé adjacent dit "lé supérieur"-recouvrant une bande du lé inférieur, caractérisé en ce que les plaquettes de répartition sont telles que définies ci-dessus.

Suivant une autre caractéristique : le bord extérieur de la plaquette est disposé le long du bord adjacent du lé inférieur de matériau d'étanchéité.

L'invention va être décrite plus en détail ci-dessous en se référant aux dessins annexés, donnés uniquement à titre d'exemples et sur lesquels :

La Fig. 1 est une vue en perspective montrant la disposition d'ensemble de deux lés d'un revêtement d'étanchéité;

La Fig. 2 est une vue de dessus d'une première réalisation de l'invention, le lé supérieur étant en partie arraché;

La Fig. 3 est une vue en coupe suivant la ligne 3-3 de la Fig. 2;

Les Fig. 4, 6, 8 et 10 sont des vues de dessus de variantes de réalisation;

Les Fig. 5, 7, 9 et 11 sont respectivement des vues en coupe suivant les lignes 5-5, 7-7, 9-9, 11-11 des Fig. 4, 6, 8 et 10.

On voit sur la Fig. 1 un premier lé ou lé inférieur 1 d'un matériau d'étanchéité, posé sur un support 2 et fixé sur ce support le long d'un de ses bords 3. Cette fixation est réalisée au moyen de vis 4 et de plaquettes 5 de répartition interposées entre la tête de la vis et le matériau d'étanchéité.

Un deuxième lé ou lé supérieur 6 est disposé en recouvrant partiellement le premier sur une bande 7 d'une certaine largeur L à partir du bord 3 du lé inférieur.

Selon l'invention et comme représenté aux Fig. 2 et 3, une plaquette de répartition 25, de forme rectangulaire dont les sommets peuvent être arrondis, comporte un orifice 26 pour le passage de l'organe de fixation, qui est décalé en direction du bord 29 de la plaquette le plus éloigné du bord 3 du lé inférieur. On désignera par l'expression bord extérieur le bord 30 de la plaquette le plus proche du bord 3 du lé et par bord intérieur le bord opposé 29. En l'occurrence l'orifice 26 pour le passage de l'organe de fixation est donc plus proche du bord intérieur 29 de la plaquette que de son bord extérieur 30.

A titre d'exemple, cet orifice peut être situé à peu près au tiers de la largeur de la plaquette.

Cette disposition de l'orifice 26 permet de rapprocher le bord extérieur 30 de la plaquette du bord adjacent 3 du lé, tout en conservant une distance déterminée entre l'axe de l'organe de fixation et ce même bord 3. Il en résulte que tout en conservant une largeur également déterminée entre le bord intérieur 29 de la plaquette et le bord adjacent 11 du lé supérieur, on peut réduire la largeur totale de la bande de recouvrement entre les deux lés.

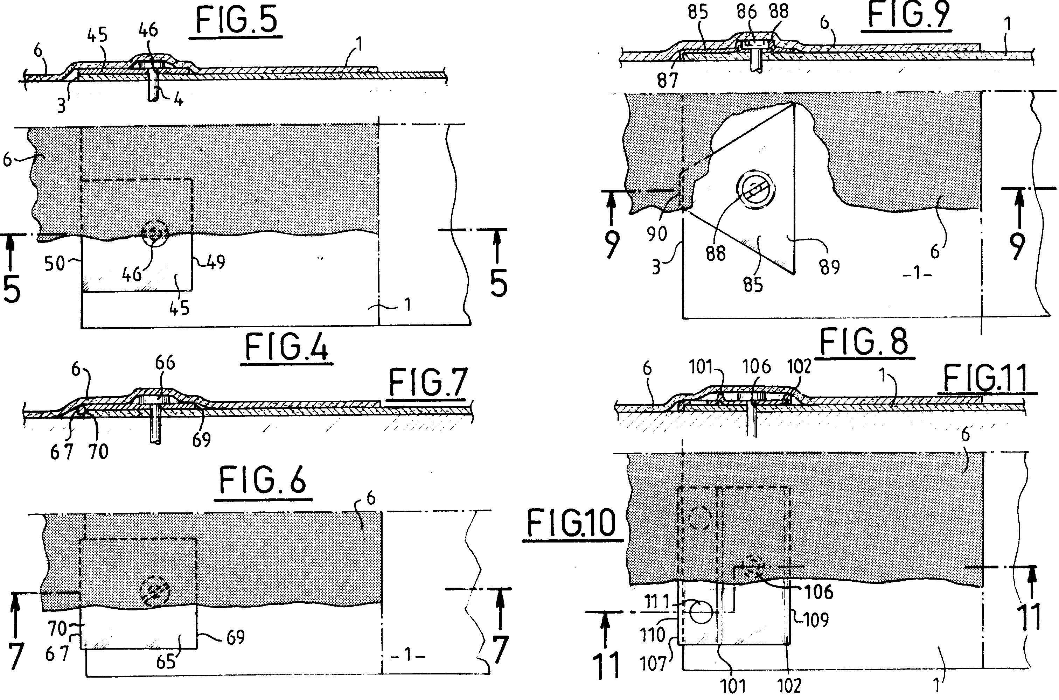

Dans le mode de réalisation des Fig. 4 et 5, la plaquette de répartition 45 a une forme carrée avec des sommets qui peuvent être arrondis, l'orifice 46 pour le passage de l'organe de fixation étant comme dans l'exemple précédent disposé plus près du bord intérieur 49 de la plaquette que de son bord extérieur 50.

Dans ce mode de réalisation, le bord extérieur 50 de la plaquette de répartition est sensiblement aligné avec le bord adjacent 3 du lé inférieur 1, ce qui facilite la mise en place de cette plaquette et permet de réduire encore la largeur totale de recouvrement entre les deux lés.

On voit sur les Fig. 6 et 7 une plaquette 65 de forme sensiblement carrée comportant un orifice décalé 66 et comportant de plus un rebord 67 le long de son bord extérieur 70, ce rebord étant dirigé vers le bas en considérant la position de pose de la plaquette, et ayant une hauteur au plus égale à l'épaisseur du matériau d'étanchéité constituant le revêtement.

Grâce à la présence de ce rebord, la plaquette est très facile à mettre en place et parfaitement positionnée par rapport au matériau d'étanchéité. Elle ne risque pas de tourner lors du serrage de la vis de fixation. De plus cela permet de garantir la distance entre le bord du lé et l'organe de fixation.

La plaquette 85 représentée aux Fig. 8 et 9 a une forme trapézoïdale et plus précisément une forme de trapèze isocèle dont la petite base 90 munie d'un rebord 87 est alignée avec le bord adjacent 3 du lé. La grande base du trapèze constitue le bord intérieur 89 de la plaquette et l'orifice 86 pour le passage de l'organe de fixation est disposé plus près de cette grande base que de la petite base. Cet orifice est entouré d'une nervure annulaire 88.

Dans ce mode de réalisation, l'axe de l'orifice 86 se trouve sensiblement confondu avec le centre de gravité de la plaquette.

Enfin la variante représentée aux Fig. 10 et 11 prévoit une plaquette 105 de forme générale rectangulaire comportant deux nervures 101, 102 disposées parallèlement au grand côté du rectangle, et un rebord 107 dirigé vers le bas disposé le long du bord extérieur de la plaquette.

Cette dernière comporte comme les précédentes un orifice 106 pour le passage de l'organe de fixation, qui est plus proche du bord intérieur 109 que du bord extérieur 110 de la plaquette, et deux orifices supplémentaires 111 disposés entre la nervure centrale 101 et le bord extérieur 110 et dont le rôle est d'améliorer la jonction entre les deux lés de matériau d'étanchéité en réalisant un pont entre le matériau constituant ces deux lés, lorsque le lé supérieur est collé ou solidarisé de toute autre façon au lé inférieur.

Bien entendu les plaquettes des modes de réalisation des Fig. 2, 3 et 4, 5 peuvent être réalisées avec un rebord le long de leur bord extérieur, comme cela a été représenté pour les modes de réalisation des Fig. 6-7, 8-9 et 10-11.

Des orifices tels que les orifices 111 peuvent être prévus dans les autres modes de réalisation de la plaquette décrits à propos des Fig. 2 à 9.

D'autres variantes peuvent par ailleurs être apportées soit à la plaquette elle-même soit au dispositif de fixation ou d'étanchéité dans son ensemble. C'est ainsi que les plaquettes peuvent être revêtues d'adhésif, de primaire ou d'auto-adhésif.

Il est également possible de renforcer l'armature de chaque lé dans la zone ou bande correspondant à la fixation, ce renforcement particulier pouvant être réalisé au moyen de tissu, feutre, fibres ou voile de verre, de polyester ou autre matériau convenable.

Le revêtement décrit ici peut être utilisé seul ou en combinaison avec au moins une couche d'étanchéité supplémentaire.

On constate que les objectifs recherchés sont parfaitement atteints et ce par des moyens très simples et peu coûteux. Ainsi, une économie substantielle peut être réalisée, tant en ce qui concerne le matériau d'étanchéité (par la réduction de la largeur du recouvrement entre lés) que le coût de mise en oeuvre de tels systèmes (de par un positionnement plus rapide car plus facile des plaquettes de fixation).

## Revendications

1. Plaquette de fixation d'une membrane d'étanchéité sur un support, cette plaquette comportant au moins un orifice (26; 46; 66; 86; 106) pour le passage d'au moins un organe de fixation (4) et présentant un bord extérieur (30; 50; 70; 90; 110), défini comme étant le plus proche du bord adjacent (3) de la membrane (1), et un bord intérieur (29; 49; 69; 89; 109) opposé au bord extérieur, caractérisée en ce que l'orifice (26; 46; 66; 86; 106) de passage de l'organe de fixation est situé plus proche du bord intérieur de la plaquette que de son bord extérieur.

2. Plaquette suivant la revendication 1, caractérisée en ce que l'orifice pour le passage de l'organe de fixation est disposé à peu près au tiers de la distance séparant les deux bords intérieur et extérieur de la plaquette.

3. Plaquette suivant la revendication 1, caractérisée en ce qu'elle comporte le long de son bord extérieur un rebord (67; 87; 107) ayant une hauteur inférieure ou égale à l'épaisseur de la membrane d'étanchéité avec laquelle la plaquette doit être utilisée;

4. Plaquette suivant l'une quelconque des revendications 1 à 3, caractérisée en ce qu'elle comporte au moins une nervure de renforcement (88; 101, 102).

5. Plaquette suivant l'une quelconque des revendications 1 à 4, caractérisée en ce qu'elle comporte au moins un orifice supplémentaire (111) destiné à améliorer la liaison entre deux lés adjacents de la membrane d'étanchéité, dans la zone de leur recouvrement.

6. Plaquette suivant l'une quelconque des revendications 1 à 5, caractérisée en ce que l'axe de l'orifice de passage de l'organe de fixation passe sensiblement par le centre de gravité de la plaquette.

7. Plaquette suivant l'une quelconque des revendications 1 à 6, caractérisée en ce qu'elle a la forme d'un trapèze isocèle et l'orifice pour le passage de l'organe de fixation est plus proche du bord (89) correspondant à la grande base du trapèze.

8. Revêtement d'étanchéité notamment pour toiture de bâtiment, formé de plusieurs lés (1, 6) d'un matériau d'étanchéité, un lé inférieur (1) étant fixé sur son support (2) au moyen d'organes de fixation (4) comportant une tête et une tige, ainsi que de plaquettes de répartition (25; 45; 65; 85; 105) disposées entre la tête des organes de fixation et le matériau d'étanchéité, ces moyens de fixation étant disposés au voisinage d'un bord d'un lé dit "lé inférieur", et un lé adjacent dit "lé supérieur" recouvrant une bande du lé inférieur, caractérisé en ce que les plaquettes de répartition sont telles que définies dans l'une quelconque des revendications 1 à 7.

9. Revêtement d'étanchéité suivant la revendication 8, caractérisé en ce que le bord extérieur (50; 70; 90; 110) de la plaquette est disposé le long du bord adjacent 3 du lé inférieur (1) de matériau d'étanchéité.

10. Revêtement d'étanchéité suivant l'une des revendications 8 et 9, caractérisé en ce que la zone du lé inférieur (1) dans laquelle est réalisée la fixation comporte une armature renforcée dont les performances en résistance à la déchirure sont supérieures à celles de l'armature prévue dans la partie restante du lé.

FIG.1

FIG.3

FIG.2

FIG.5

FIG.4

FIG.7

FIG.6

FIG.9

FIG.8

FIG.11

FIG.10

EP 0 475 826 A1

EP 0 475 826 A1

Office européen des brevets

# RAPPORT DE RECHERCHE EUROPEENNE

Numero de la demande

EP    91 40 2385

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X Y A | US-A-1 618 902 (H.YOST) <br><br> * page 1, ligne 1 - ligne 67; figures 1-3 * <br>--- | 1,2,5,6 <br> 3,4,8,9 <br> 7,10 | E04D5/14 <br> E04B1/66 <br> F16B43/00 |
| Y A | US-A-1 642 088 (T.M.SCARFF) <br><br> * page 2, colonne 1, ligne 10 - colonne 2, ligne 33; figures 1-4 * <br>--- | 3,4,8,9 <br> 1,7,10 | |
| A | DE-B-1 054 692 (HOMOGENOL-FABRIK O. TEPEL) <br> * colonne 2, ligne 31 - ligne 41; figures 1,2 * <br>--- | 10 | |
| A | DE-A-3 018 676 (ROMA GMBH) <br> * page 4, ligne 1 - ligne 10; figure * <br>--- | 1,8 | |
| A | FR-A-419 491 (A.W.ANDERNACH) <br> * figures 1-6 * <br>----- | 1 | |

| DOMAINES TECHNIQUES RECHERCHES (Int. Cl.5 ) |
|---|
| E04D <br> E04B <br> F16B |

Le présent rapport a été établi pour toutes les revendications

| Lieu de la recherche | Date d'achèvement de la recherche | Examinateur |
|---|---|---|
| LA HAYE | 07 OCTOBRE 1991 | RIGHETTI R. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)

7